# FASCICULE DE BREVET EUROPEEN

(11) **EP 1 695 792 B1**
(45) Date de publication et mention de la délivrance du brevet: **18.07.2018**
(21) Numéro de dépôt: 06075988.3
(22) Date de dépôt: 14.06.2002
(51) Int. Cl.: B23Q 39/04, B23Q 1/00, H02G 11/00, H01R 35/02, B23Q 1/54, B23Q 11/00, B23Q 1/70, B23Q 5/10

(54) **Machine multiposte à transfert rotatif pour usinage de pièces**
Rundtaktwerkzeugmaschine zur Bearbeitung von Werkstücken
Multi-station rotary transfer machine for the machining of workpieces

(30) Priorité: 15.06.2001 FR 0108067
(43) Date de publication de la demande: 30.08.2006
(62) Demande divisionnaire de: 02745527.8
(73) Titulaire: WIRTH ET GRUFFAT TECHNOLOGIES, 74370 Argonay (FR)
(72) Inventeur: Zuccalli, Laurent, 74270 Frangy (FR)
(74) Mandataire: Cabinet Poncet

(56) Documents cités:
- EP-A- 0 371 936
- EP-A- 0 522 385
- EP-A- 0 785 040
- EP-A- 0 937 539
- DE-A- 19 504 368
- DE-A1- 3 537 783
- DE-U- 8 714 508
- FR-A- 1 376 657
- GB-A- 1 494 173
- US-A- 4 520 595
- US-A- 4 523 360
- US-A- 5 452 502
- US-A- 5 815 902
- US-A- 5 832 590
- PATENT ABSTRACTS OF JAPAN vol. 006, no. 201 (M-163), 13 octobre 1982 (1982-10-13) -& JP 57 107759 A (HONDA MOTOR CO LTD), 5 juillet 1982 (1982-07-05)

## Description

### DOMAINE TECHNIQUE DE L'INVENTION

La présente invention concerne les machines-outils permettant l'usinage rapide de pièces en grande série.

Les opérations de tournage de pièces en grande série sont généralement réalisées sur des tours multibroche. Dans un tour multibroche, plusieurs pièces sont tenues simultanément chacune sur l'une des broches d'une série de broches entraînées par un même moteur et disposées parallèlement les unes aux autres, généralement selon une disposition en couronne. L'avantage est un usinage très rapide par tournage, avec une bonne précision d'usinage. L'inconvénient est qu'un tour multibroche n'effectue que des opérations de tournage.

Par conséquent, lorsqu'une pièce doit subir plusieurs types d'usinage successifs, le tournage peut être effectué sur le tour multibroche, et les autres opérations doivent être effectuées en reprise, c'est-à-dire après déplacement de la pièce et fixation sur un support d'une autre machine d'usinage adaptée aux autres opérations. Il en résulte une complexité de manipulation, et une perte de précision de position entre les différentes surfaces réalisées par les usinages successifs.

On connaît également des centres d'usinage, dans lesquels la pièce est tenue dans un poste d'usinage unique, et est soumise à l'action successive de plusieurs outils. Il n'est alors pas nécessaire de déposer la pièce pour la remonter sur un autre support pour les usinages successifs, de sorte que l'on gagne en précision. L'inconvénient est une perte importante de rapidité, car tous les outils travaillent sur une seule pièce disposée dans un poste d'usinage unique.

On connaît également des machines à transfert rotatif, dans lesquelles les pièces sont disposées sur une tourelle rotative qui les amène successivement à plusieurs postes d'usinage ayant chacun leurs outils propres. Ces machines à transfert rotatif sont utilisées à ce jour pour les usinages en reprise après le tournage par un tour multibroche.

On a pu être tenté d'adapter, sur un tour multibroche, d'autres outils pour effectuer des opérations d'usinage complémentaires. Mais le tour multibroche ne se prête pas bien à la disposition d'outils supplémentaires, notamment à cause d'un manque de place pour loger les outils ; les broches sont en effet relativement proches les unes des autres.

On connaît également du document DE 87 14 508 U une machine multiposte selon le préambule de la revendication indépendante 1 comprenant :
- une tourelle rotative indexable équipée de plusieurs dispositifs de tenue de pièces répartis en périphérie de la tourelle,
- une pluralité de dispositifs de tenue et de positionnement d'outils, répartis en une pluralité de postes d'usinage autour de la tourelle, déplaçables sur des glissières horizontales inférieures, et adaptés pour usiner les pièces portées par les dispositifs de tenue de pièces,
- les dispositifs de tenue de pièces comprenant des broches de tournage, placées en position fixe sur la tourelle, dont l'axe est orienté vers la périphérie de la tourelle et qui sont sollicitées par un moteur déporté verticalement pour entraîner en rotation rapide la pièce pour une opération de tournage par des outils de tournage prévus dans l'un au moins des postes d'usinage,
- les broches de tournage étant capables de s'indexer en toutes positions angulaires pour permettre d'autres usinages de la pièce par d'autres outils adaptés prévus dans l'un au moins des postes d'usinage.

Ce document ne décrit ni l'intérêt ni les moyens pour maximiser le nombre et la puissance des dispositifs de tenue de pièces sur la tourelle. De plus, tous les postes de travail comprennent des porte-outils frontaux qui s'opposent à l'accès radial à la zone d'usinage et interdisent le chargement de barres.

### EXPOSE DE L'INVENTION

Un problème proposé par la présente invention est de concevoir une nouvelle structure de machine-outil permettant de réaliser des usinages rapides et multiples, tous les usinages d'une pièce pouvant être réalisés sur une même machine sans déposer la pièce de son support ; la structure doit être adaptée pour recevoir des outils en nombre suffisant et de taille suffisante, sans problème de place pour leur logement, et en assurant l'évacuation efficace des déchets d'usinage. Et la structure doit être adaptée pour comporter des dispositifs de tenue de pièces en nombre suffisant et de puissance suffisante pour les usinages envisagés, tout en minimisant l'encombrement de la machine-outil.

Une autre difficulté est d'assurer un usinage précis des pièces, notamment grâce à la précision des dispositifs de tenue de pièces.

Pour atteindre ces buts ainsi que d'autres, l'invention part d'une machine multiposte d'usinage de pièces à transfert rotatif selon le préambule de la revendication 1, avec des broches porte-pièces portées par une tourelle centrale.

L'un des problèmes d'une telle structure à broches portées par une tourelle centrale est l'amenée des énergies électrique, pneumatique, hydraulique dans la tourelle.

Ce problème est résolu selon l'invention en prévoyant une machine multiposte selon la revendication 1, dans laquelle l'alimentation des broches de tournage en énergie électrique est assurée par un faisceau de câbles et de tuyaux enroulé autour de l'axe de rotation de la tourelle entre une zone de branchement fixe sur le bâti et une zone de branchement rotative sur la tourelle de la machine.

Selon l'invention le faisceau de câbles et de tuyaux est conformé en un S qui se replie et se déploie pendant la rotation.

De préférence, la zone de branchement fixe est située au-dessus de la tourelle.

Selon un mode de réalisation avantageux, certains au moins des postes d'usinage comprennent une paroi support verticale orientée parallèlement à l'axe d'une électrobroche de tournage et portant un plateau porte-unité d'usinage par l'intermédiaire d'une coulisse axiale et d'une coulisse verticale constituant une structure de chariots croisés.

De préférence, on prévoit dans au moins certains des postes d'usinage deux structures de chariots croisés, une première structure avec un premier plateau pour couvrir l'espace inférieur et frontal d'usinage, une seconde structure avec un second plateau pour couvrir l'espace supérieur d'usinage.

Selon un mode de réalisation particulièrement avantageux, la machine comprend des passages d'évacuation inférieurs entre les parois supports verticales successives. Cette disposition facilite considérablement l'évacuation des déchets d'usinage, et est rendue possible par le fait que les chariots sont tenus sur des parois verticales qui ne perturbent pas l'évacuation des déchets.

De préférence, les électrobroches de tournage ont une forme générale rétrécie vers l'intérieur de la tourelle, les électrobroches étant ainsi susceptibles de se loger les unes à côté des autres dans la tourelle sans nécessiter d'augmenter le diamètre de la tourelle.

Les moyens de commande de rotation de tourelle peuvent assurer une rotation alternative de la tourelle, avec une séquence d'usinage à rotations partielles depuis une position d'origine dans un premier sens pour les transferts successifs des pièces de poste en poste entre les étapes d'usinage successives, et avec une séquence de retour à rotation inverse rapide jusqu'en position d'origine de la tourelle. On peut avantageusement prévoir onze rotations partielles de séquence d'usinage, et une rotation de retour de 330°.

On peut trouver avantage à commander la rotation de la tourelle par un double indexage, c'est-à-dire en faisant une rotation de deux pas faisant tourner la tourelle pour déplacer une pièce depuis un poste jusqu'au poste qui suit le poste adjacent. Il est alors possible d'alterner les types d'usinage, et de prévoir par exemple six opérations de tournage à broche rotative et six opérations d'usinage à broche fixe.

Un autre problème que se propose de résoudre l'invention est d'usiner toutes les faces d'une pièce. On prévoit pour cela des moyens permettant d'usiner une première partie de surface de pièce dans certains postes, puis de retourner la pièce de 180° pour l'usiner sur les autres portions de surface.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue générale en perspective d'une machine multiposte d'usinage selon un mode de réalisation de la présente invention ;
- la figure 2 est une vue de dessus de la machine de la figure 1 ;
- la figure 3 est une vue partielle de dessus en coupe de la machine de la figure 1, montrant les structures de broche et les mécanismes de tenue de pièce ;
- la figure 3A est une vue partielle de dessus en coupe de la machine selon un mode de réalisation particulier à poste de chargement et de retournement ;
- la figure 4 est une vue de détail en perspective montrant la structure d'un porte-outil sur la machine de la figure 1 ;
- la figure 5 est une vue partielle en perspective illustrant le mécanisme d'entraînement en rotation de la tourelle ;
- la figure 6 est une vue partielle en perspective illustrant un premier mode de réalisation du principe d'alimentation en énergie des broches de tournage de la tourelle, ce mode de réalisation ne faisant pas partie de l'invention;
- la figure 7 est une vue schématique de dessus d'un mode de réalisation selon l'invention des moyens d'alimentation en énergie des broches de tournage de la tourelle ; et
- la figure 8 est une vue de dessus en coupe longitudinale d'une structure possible de broche de tournage selon la présente invention.

### DESCRIPTION DES MODES DE REALISATION PREFERES

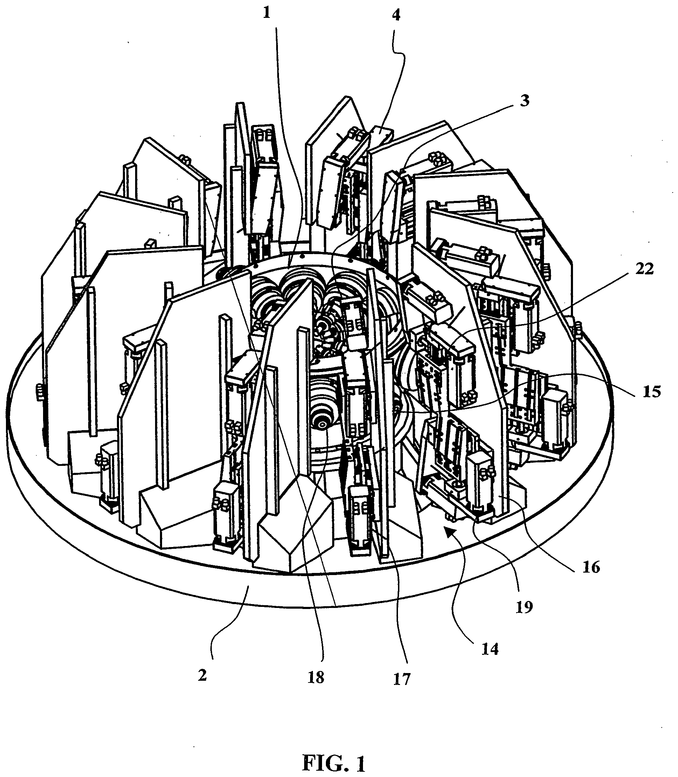

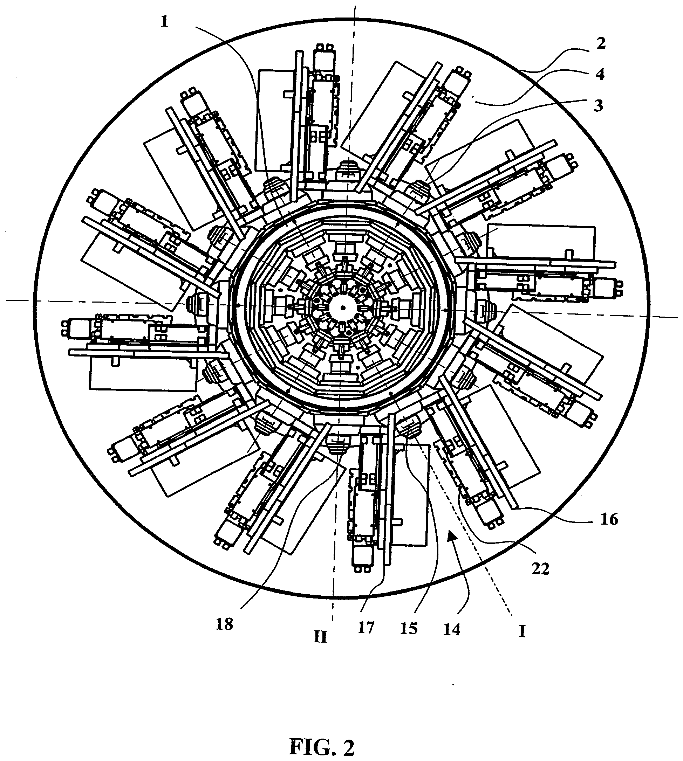

Dans la réalisation illustrée sur les figures, comme on le voit en particulier sur les figures 1 et 2, une machine multiposte d'usinage de pièces à transfert rotatif selon l'invention comprend de façon générale une tourelle 1 rotative indexable, montée à rotation autour d'un axe vertical sur un bâti 2. Le bâti 2 comprend une pluralité de dispositifs de tenue et de positionnement d'outils, répartis en une pluralité de postes d'usinage autour de la tourelle 1, et adaptés pour usiner des pièces portées par des dispositifs de tenue de pièces prévus sur la tourelle 1. Les dispositifs de tenue de pièces sur la tourelle 1 sont des électrobroches de tournage, par exemple l'électrobroche 3. Dans le mode de réalisation des figures 1 et 2, on distingue ainsi douze électrobroches de tournage telles que l'électrobroche 3, réparties équitablement en périphérie de la tourelle 1, et ayant un axe orienté radialement vers la périphérie de la tourelle 1. Les électrobroches de tournage 3 sont capables d'entraîner en rotation rapide une pièce tenue sur la broche pour une opération de tournage par des outils de tournage prévus sur un poste d'usinage correspondant.

On distingue sur les figures 1 et 2 douze postes d'usinage tels que le poste 4 qui, dans la position de la tourelle 1, correspond à l'électrobroche de tournage 3.

Les électrobroches de tournage telles que l'électrobroche 3 sont capables de s'indexer en toutes positions angulaires, en conservant alors un couple de blocage de la pièce qui soit suffisant pour permettre l'usinage de la pièce par des outils adaptés du poste d'usinage correspondant tel que le poste d'usinage 4.

De préférence, les électrobroches de tournage sont en outre capables de tourner à des vitesses très lentes et parfaitement synchronisées avec un autre mouvement des dispositifs de tenue et de positionnement d'outils.

Comme on le voit bien sur la figure 2, la disposition centrale des électrobroches de tournage 3 implique, pour des questions d'encombrement, d'utiliser de préférence des électrobroches de tournage ayant une forme générale qui va en se rétrécissant vers l'intérieur c'est-à-dire vers l'axe de rotation central de la tourelle 1. Par contre, en périphérie des électrobroches de tournage 3, on dispose d'une place beaucoup plus large pour contenir les outils dans le poste d'usinage 4.

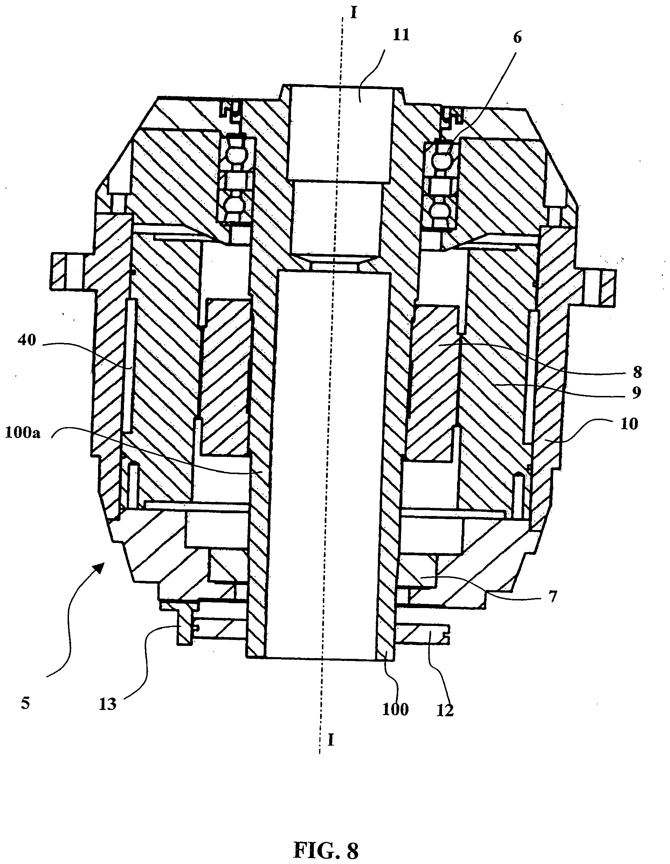

Si on se réfère à la figure 8, on distingue, dans l'électrobroche de tournage 5, une broche 100 rotative autour de l'axe I-I, portée par un premier roulement ou palier 6 et un second roulement ou palier 7. Le tronçon intermédiaire 100a de broche 100 entre les roulements ou paliers 6 et 7 est solidaire d'un rotor 8 de moteur qui est sollicité en rotation dans un stator 9 de moteur. L'ensemble est enfermé dans une carcasse 10. L'électrobroche 5 constitue ainsi une structure compacte qui minimise l'encombrement axial et radial et favorise la disposition d'un nombre maximal d'électrobroches sur la tourelle, tout en assurant une grande précision de tenue de pièce.

Dans la broche 100, on prévoit des logements tels que le logement 11 pour contenir le système de serrage de pièce, non représenté sur les figures.

Une roue codée 12 est calée sur la broche 100, et tourne face à un capteur optique 13 fournissant des signaux de position angulaire de broche qui sont envoyés à une commande du moteur (8, 9) pour piloter sa rotation et piloter sélectivement son blocage en rotation et son maintien en une position fixe déterminée et appropriée pour un usinage d'une pièce tenue fixe.

Pour atteindre une précision d'usinage satisfaisante, on contrôle la température de fonctionnement de l'électrobroche 5 support de pièce en assurant son refroidissement par passage d'un liquide de refroidissement dans un logement annulaire 40 en périphérie du stator 9.

Dans le mode de réalisation illustré sur les figures, les postes d'usinage sont sensiblement identiques. On pourra toutefois concevoir une structure de machine dans laquelle les postes d'usinage diffèrent les uns des autres.

On décrira maintenant plus en détail l'un des postes d'usinage, par exemple le poste d'usinage 14 sur les figures 1 à 3, qui se trouve face à une broche de tournage 15 dans la position angulaire représentée de la tourelle 1.

Le poste d'usinage 14 est limité latéralement par deux parois supports verticales 16 et 17, fixes sur le bâti 2. La première paroi support verticale 16 est orientée parallèlement à l'axe I de la broche de tournage 15, en étant décalée latéralement par rapport à l'axe I pour laisser la place des outils fixes du poste d'usinage 14. La seconde paroi support verticale 17 est elle-même parallèle à l'axe II de la broche adjacente 18 de la tourelle 1.

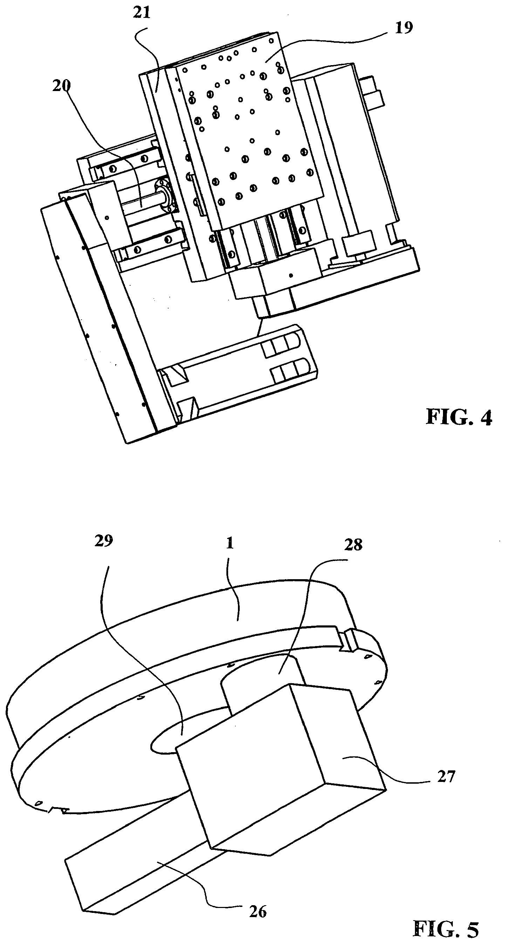

La première paroi support verticale 16 porte un plateau 19, mieux visible sur la figure 4, par l'intermédiaire d'une coulisse axiale 20 et d'une coulisse verticale 21, constituant une structure de chariots croisés. Le plateau 19 est adapté pour porter des outils ou des unités d'usinage du poste d'usinage 4. Ainsi, la coulisse axiale 20 permet les mouvements de déplacement des outils parallèlement à l'axe de la broche de tournage 15, tandis que la coulisse verticale 21 permet les mouvements perpendiculaires.

En réalité, dans le mode de réalisation illustré sur la figure 1, le poste d'usinage 14 comprend une première structure de chariots croisés portant le plateau 19, et une seconde structure de chariots croisés portant un plateau 22. La première structure de chariots croisés à plateau 19 permet de porter des outils dans l'espace inférieur d'usinage, à côté ou au-dessous de l'axe de la broche de tournage 15, tandis que la seconde structure de chariots croisés à plateau 22 permet de porter des outils dans la zone supérieure au-dessus ou à côté de l'axe de la broche de tournage 15.

De préférence, le bâti 2 est ajouré, comportant des passages d'évacuation inférieurs au droit de chaque poste d'usinage tels que les postes 4 ou 14, entre les parois supports verticales telles que les parois 16 et 17. Les déchets d'usinage peuvent ainsi être évacués par gravité vers le bas, sans gêner l'usinage ni le déplacement de la tourelle 1.

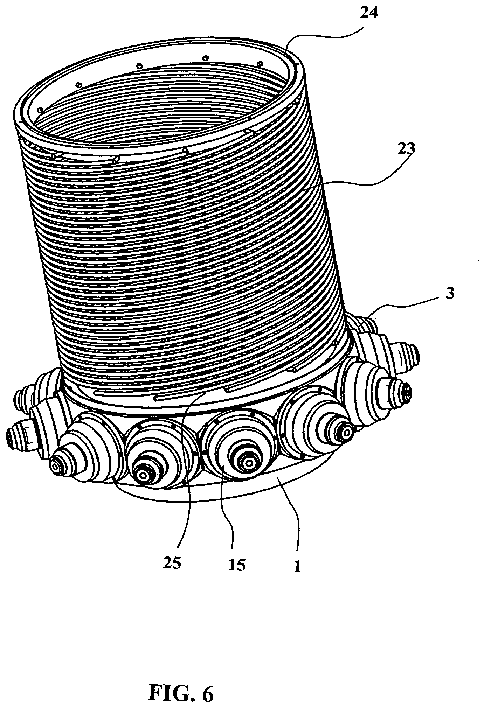

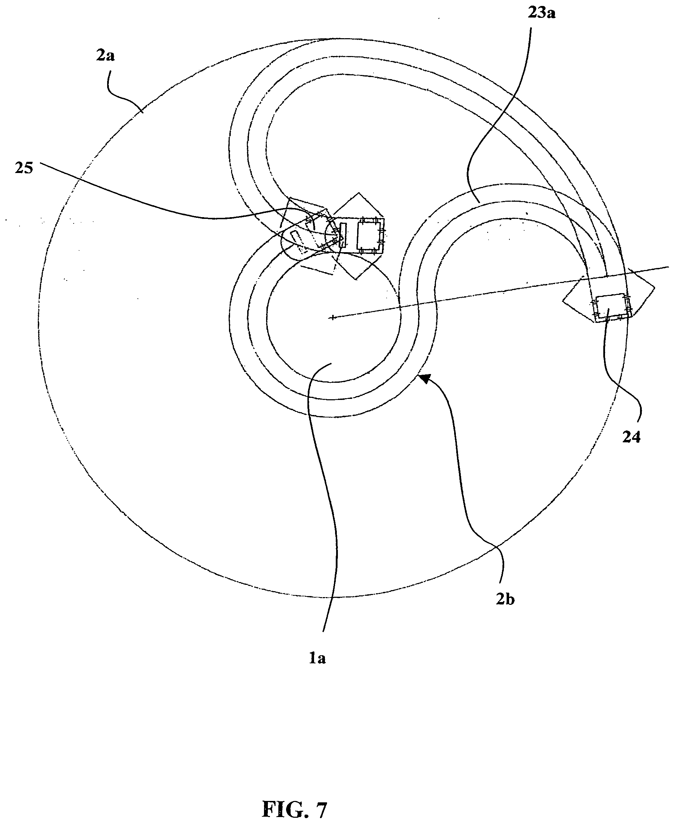

On comprend que les électrobroches de tournage telles que les électrobroches 3 et 15 de la tourelle 1 doivent être alimentées en énergie électrique pour le moteur, en énergie hydraulique pour le serrage de la pièce dans la broche, en eau pour le refroidissement, en huile pour la lubrification, et éventuellement en air pour certaines opérations nécessitant l'énergie pneumatique. L'apport de toutes ces énergies s'effectue, selon l'invention, par un faisceau de câbles et de tuyaux enroulé de façon appropriée. La figure 6 montre un mode de réalisation de l'alimentation en énergie des broches de tournage de la tourelle. Le mode de réalisation de la figure 6 ne fait pas partie de l'invention. Sur cette figure, on voit la tourelle 1 avec des broches de tournage telles que la broche 15 et la broche 3. Le faisceau hélicoïdal 23 de câbles et de tuyaux est enroulé en hélice entre une zone de branchement fixe 24 solidaire du bâti 2 et une zone de branchement rotative 25 montée sur la tourelle 1. De préférence, la zone de branchement fixe 24 est au-dessus de la tourelle 1. De bons résultats sont obtenus avec un faisceau hélicoïdal 23 de câbles et de tuyaux comportant au moins quatre spires pour chaque câble ou tuyau lorsque le faisceau est à l'état enroulé. La figure 7 montre un mode de réalisation selon l'invention de l'alimentation en énergie des broches de la tourelle. Un faisceau 23a en S de câbles et de tuyaux s'enroule et se déroule entre un moyeu central la rotatif, un guide périphérique annulaire fixe 2a et un guide intermédiaire annulaire fixe 2b. La figure illustre les deux positions angulaires limites du dispositif.

On comprend que la tourelle 1 doit pivoter pour amener les pièces d'un poste à l'autre, et elle doit être maintenue indexée en position fixe lorsque la pièce est face aux outils du poste d'usinage. On peut avantageusement maintenir la tourelle 1 en position fixe à l'aide d'une denture HIRTH. La figure 5 illustre schématiquement les moyens d'entraînement et d'indexage de la tourelle 1 : on distingue un moteur 26 qui entraîne la tourelle 1 par un réducteur 27, un pignon 28 et une roue 29. Des moyens de repérage de position angulaire de la tourelle 1 permettent de piloter le moteur 26, en définissant les positions dans lesquelles la tourelle 1 doit être indexée et maintenue fixe pour un usinage dans un poste d'usinage. Les broches d'usinage sont alors face aux postes d'usinage.

Le moteur 26 est piloté par des moyens de commande de tourelle, assurant une rotation de tourelle dans deux sens de rotation. Dans un premier sens, la rotation est intermittente, pour déplacer les pièces de poste en poste. Dans ce premier sens de rotation, les câbles et tuyaux hélicoïdaux se déroulent ou s'enroulent progressivement. Ensuite, on effectue une rotation inverse rapide, selon une révolution, pour enrouler ou dérouler à nouveau les faisceaux de câbles et de tuyaux hélicoïdaux.

Les moyens d'entraînement des broches sont adaptés pour entraîner sélectivement les broches à une vitesse de rotation de 0 à environ 6 000 tours/minute, par exemple, tout en assurant une possibilité d'indexage fixe et un fort couple de blocage contre les rotations pour tenir les pièces en position fixe au cours de certaines étapes d'usinage. Pour cela, le moteur de la broche est avantageusement un moteur synchrone, alimenté par une alimentation à commande numérique. La puissance développée par le moteur des broches peut avantageusement être de l'ordre de 10 kW à 3 500 tours/minute.

La disposition de deux structures de chariots croisés à chaque poste de travail permet de travailler les pièces par le dessus, par la face frontale, mais également par le dessous.

Le système de tenue de pièce sur la broche peut être un système traditionnel tel que ceux qui sont actuellement utilisés. En conséquence, il n'est pas nécessaire de le décrire car il est à la portée de l'homme du métier.

Les moyens de commande de rotation de la tourelle 1 peuvent avantageusement permettre un double indexage, à savoir un indexage simple pour faire pivoter la tourelle 1 d'un angle de rotation correspondant à l'angle nécessaire pour amener une pièce depuis un poste de travail jusqu'au poste de travail adjacent, et un indexage double correspondant à une rotation de tourelle permettant d'amener une pièce directement jusqu'au poste d'usinage qui suit le poste adjacent.

Les différents organes de la machine sont avantageusement pilotés par une commande centralisée comprenant un microprocesseur à mémoire associée et programme enregistré. La commande centralisée reçoit les signaux de capteurs de position tels le capteur optique 13 associé à la roue codée 12, et commande le fonctionnement des moteurs pour contrôler les mouvements des pièces et des outils. De plus, la commande centralisée connaît à tout instant la position angulaire de la pièce en cours d'usinage, même après une opération de tournage.

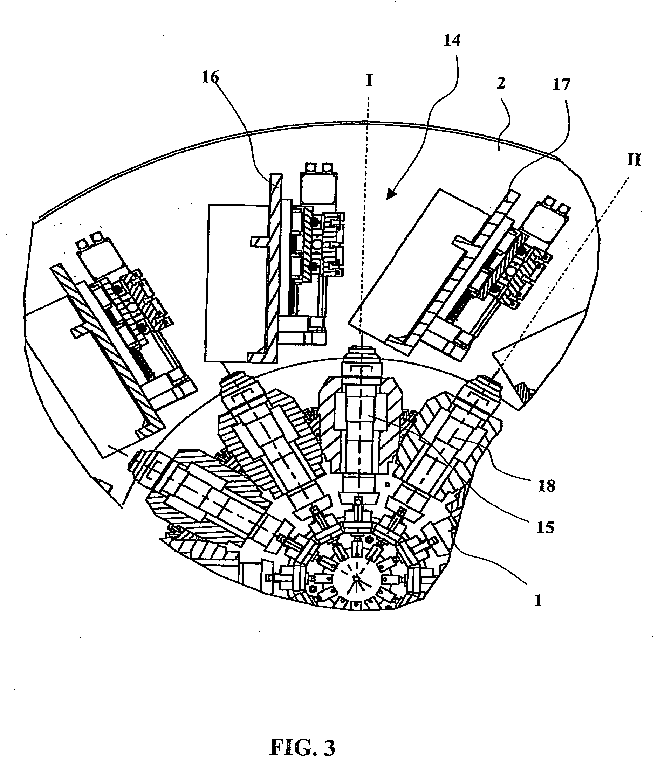

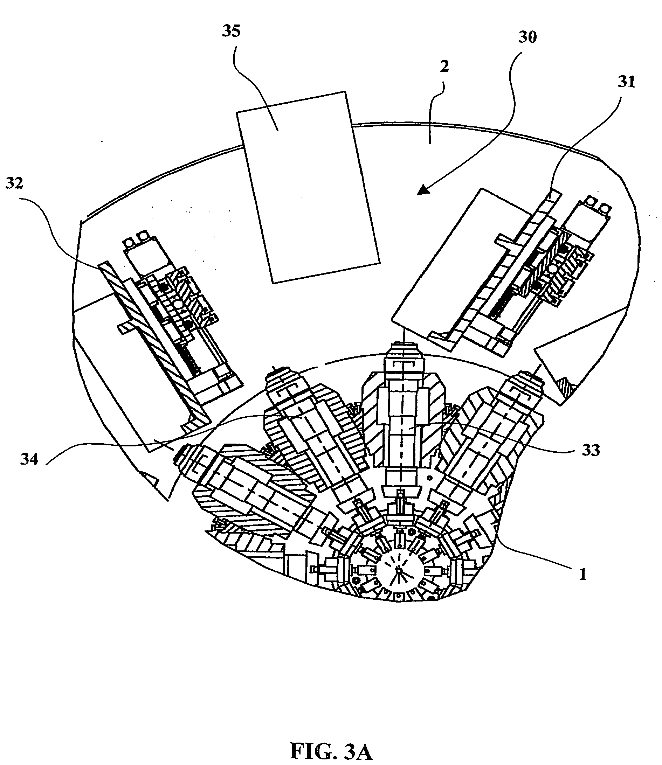

Le mode de réalisation illustré sur la figure 3A est adapté notamment au chargement automatique de la matière première à usiner, quelle que soit sa forme. Ainsi, le mode de réalisation est adapté au chargement automatique de pièces, de lopins ou de barres. Pour cela, l'un des postes autour de la tourelle 1, à savoir le poste 30, est dépourvu de dispositif de tenue et de positionnement d'outils. On peut ainsi adapter, au poste de chargement 30, un robot de chargement de pièce ou de lopin, un embarreur, ou tout autre dispositif approprié.

Dans ce cas, le poste de chargement 30 forme également un espace d'accès radial dans lequel un robot de retournement 35 peut assurer le retournement des pièces entre deux séquences d'usinage successives. Ainsi, le poste de chargement 30 est situé entre un premier poste d'usinage 31 adjacent et un second poste d'usinage 32 adjacent. A l'instant considéré, la broche 33 de la tourelle 1 se trouve face au poste de chargement 30, tandis que la broche 34 se trouve dans le poste d'usinage 32 adjacent. L'espace est libre, dans le poste de chargement 30, entre la zone frontale de la broche 33 et la zone frontale de la broche 34. Il en résulte que, dans le poste de chargement 30, le robot de retournement 35 peut ôter une pièce de la broche de tournage 33 présente au poste de chargement 30, le robot de retournement 35 peut retourner la pièce de 180°, et le robot de retournement 35 peut engager la pièce dans la broche de tournage 34 présente dans le poste adjacent 32.

En alternative ou en complément, grâce à la disposition des postes de travail permettant un accès radial à la zone d'usinage, un robot de retournement de pièce peut être adapté dans n'importe lequel des postes d'usinage, pour, après escamotage des outils portés par le dispositif porte-outil du poste d'usinage, ôter une pièce de la broche de tournage qui se trouve dans le poste d'usinage, retourner la pièce et l'engager à nouveau dans la même broche de tournage.

Dans les deux cas, il faut prévoir une commande indépendante des broches de tournage, pour assurer un serrage et un desserrage de pièce qui soit indépendant de la tenue des pièces par les autres broches de tournage de la tourelle 1, et qui puisse de préférence assurer une pression de serrage de la pièce qui soit modulable indépendamment des autres broches de tournage. Egalement, les broches de tournage sont commandées en rotation indépendamment les unes des autres, afin de s'adapter de façon souple aux différents usinages réalisés sur les différents postes.

De la sorte, le dispositif du mode de réalisation de la figure 3A permet un usinage des pièces sur toutes leurs faces.

Le dispositif de commande de la machine peut notamment être programmé pour réaliser l'usinage en deux séquences successives et un retournement de pièces : lors d'une première séquence d'usinage, l'ébauche ou le lopin engagé sur une broche de tournage est présenté successivement à plusieurs postes d'usinage réalisant les usinages d'une première partie de sa surface, par exemple en déplaçant successivement la pièce tous les deux postes de travail ; ensuite, on retourne la pièce pour l'engager soit sur la même broche de tournage soit sur la broche adjacente ; et on exécute une seconde séquence d'usinage en présentant successivement la pièce aux mêmes postes, si la pièce est symétrique, ou aux autres postes d'usinage si les deux côtés de la pièce diffèrent.

La présente invention n'est pas limitée aux modes de réalisation qui ont été explicitement décrits, mais elle en inclut les diverses variantes contenues dans le domaine des revendications ci-après.

## Revendications

1. Machine multiposte d'usinage de pièces à transfert rotatif, comprenant :
- une tourelle (1) rotative indexable équipée de plusieurs dispositifs de tenue de pièces répartis en périphérie de la tourelle (1),
- une pluralité de dispositifs de tenue et de positionnement d'outils, répartis en une pluralité de postes d'usinage autour de la tourelle (1) et adaptés pour usiner les pièces portées par les dispositifs de tenue de pièces,
- les dispositifs de tenue de pièces comprenant des broches de tournage (3, 15), placées en position fixe sur la tourelle (1), dont l'axe (I, II) est orienté vers la périphérie de la tourelle (1) et qui sont capables d'entraîner en rotation rapide la pièce pour une opération de tournage par des outils de tournage prévus dans l'un au moins des postes d'usinage (4, 14),
- les broches de tournage (3, 15) étant capables de s'indexer en toutes positions angulaires pour permettre d'autres usinages de la pièce par d'autres outils adaptés prévus dans l'un au moins des postes d'usinage (4, 14),
**caractérisée en ce que** :
- l'alimentation des broches de tournage (3, 15) en énergie électrique est assurée par un faisceau de câbles et de tuyaux (23a) enroulé autour de l'axe de rotation de la tourelle (1) entre une zone de branchement fixe (24) sur le bâti (2) et une zone de branchement rotative (25) sur la tourelle (1),
- le faisceau de câbles et de tuyaux (23a) est conformé, en vue de dessus, en un S qui se replie et de déploie pendant la rotation de la tourelle (1).

2. Machine d'usinage selon la revendication 1, **caractérisée en ce que** la zone de branchement fixe (24) est située au-dessus de la tourelle (1).

3. Machine d'usinage selon l'une des revendications 1 ou 2, **caractérisée en ce que**, en position d'enroulement maximum, le faisceau de câbles et de tuyaux (23a) forme un S.

4. Machine d'usinage selon l'une quelconque des revendications 1 à 3, **caractérisée en ce qu'**elle comprend des moyens de commande de rotation de tourelle assurant une rotation alternative de la tourelle (1), avec une séquence d'usinage à rotations partielles depuis une position d'origine dans un premier sens pour les transferts successifs des pièces de poste en poste entre les étapes d'usinage successives, et avec une séquence de retour à rotation inverse rapide jusqu'en position d'origine de la tourelle (1).

5. Machine d'usinage selon l'une quelconque des revendications 1 à 4, **caractérisée en ce que** les moyens de commande de rotation de la tourelle (1) permettent un double indexage, à savoir un indexage simple pour faire pivoter la tourelle (1) d'un angle de rotation correspondant à l'angle nécessaire pour amener une pièce depuis un poste de travail jusqu'au poste de travail adjacent, et un indexage double correspondant à une rotation de tourelle permettant d'amener une pièce directement jusqu'au poste d'usinage qui suit le poste adjacent.

6. Machine d'usinage selon l'une quelconque des revendications 1 à 5, **caractérisée en ce que** certains au moins des postes d'usinage (4, 14) comprennent une paroi support verticale (16) orientée parallèlement à l'axe (II) d'une électrobroche de tournage (15) et portant un plateau (19) porte-unité d'usinage par l'intermédiaire d'une coulisse axiale (20) et d'une coulisse verticale (21) constituant une structure de chariots croisés.

7. Machine d'usinage selon la revendication 6, **caractérisée en ce qu'**elle comprend, dans certains au moins des postes d'usinage (14), deux structures de chariots croisés, une première structure avec un premier plateau (19) pour couvrir l'espace inférieur et frontal d'usinage, une seconde structure avec un second plateau (22) pour couvrir l'espace supérieur d'usinage.

8. Machine d'usinage selon l'une des revendications 6 ou 7, **caractérisée en ce qu'**elle comprend des passages d'évacuation inférieurs entre les parois supports verticales (16, 17) successives.

9. Machine d'usinage selon l'une quelconque des revendications 1 à 8, **caractérisée en ce que** le faisceau en S de câbles et de tuyaux (23a) s'enroule et se déroule entre un moyen central (1a), un guide périphérique annulaire (2a), et un guide intermédiaire annulaire (2b).

10. Machine d'usinage selon l'une quelconque des revendications 1 à 9, **caractérisée en ce que** le faisceau en S de câbles et de tuyaux (23a) alimente les broches de tournage de la tourelle (1) en énergie électrique pour les moteurs des broches de tournage, en énergie hydraulique pour le serrage des pièces dans les broches, en eau pour le refroidissement, en huile pour la lubrification.

11. Machine d'usinage selon l'une quelconque des revendications 1 à 10, **caractérisée en ce que** le faisceau en S de câbles et de tuyaux (23a) alimente les broches de tournage en air pour certaines opérations nécessitant l'énergie pneumatique.

12. Machine d'usinage selon l'une quelconque des revendications 1 à 11, **caractérisée en ce qu'**elle comprend, à au moins l'un des postes d'usinage, un robot de retournement de pièce qui peut ôter une pièce de la broche de tournage présente, retourner la pièce et l'engager dans ladite broche de tournage présente ou dans une broche adjacente.

## Patentansprüche

1. Rundtaktwerkzeugmaschine zur Bearbeitung von Werkstücken, umfassend:
- einen indexierbaren Revolverturm (1), ausgestattet mit mehreren Vorrichtungen zur Halterung von Werkstücken, die am Umfang des Turms (1) verteilt sind
- einer Vielzahl von Vorrichtungen zur Halterung und zur Positionierung von Werkzeugen, die in einer Vielzahl von Bearbeitungsposten rund um den Turm (1) verteilt und geeignet sind, um die Werkstücke, die von den Vorrichtungen zur Halterung von Werkstücken getragen werden, zu bearbeiten,
- wobei die Vorrichtungen zur Halterung von Werkstücken Drehspindeln (3, 15) umfassen, die auf dem Turm (1) in fester Position montiert sind, dessen Achse (I, II) zum Umfang des Turms (1) gerichtet ist, und die in der Lage sind, das Werkstück für einen Drehvorgang durch Drehwerkzeuge in schnelle Rotationen zu versetzen, die in mindestens einem der Bearbeitungsposten (4, 14) vorgesehen sind,
- wobei die Drehspindeln (3, 15) in der Lage sind, sich in allen Winkelpositionen zu indexieren, um weitere Bearbeitungen des Werkstücks durch weitere angepasste Werkzeuge, die in mindestens einem der Bearbeitungsposten (4, 14) vorgesehen sind, zu ermöglichen,
**dadurch gekennzeichnet, dass**:
- die Versorgung der Drehspindeln (3, 15) mit elektrischer Energie durch ein Kabel- und Schlauchbündel (23a) sichergestellt ist, das um die Drehachse des Turms (1) zwischen einem fixen Anschlussbereich (24) auf dem Rahmen (2) und einem drehenden Anschlussbereich (25) auf dem Turm (1) gewickelt ist,
- das Kabel- und Schlauchbündel (23a), gesehen von oben, in einem S geformt ist, das sich während der Drehung des Turms (1) zusammenfaltet und auseinanderzieht.

2. Bearbeitungsmaschine gemäß Anspruch 1, **dadurch gekennzeichnet, dass** der fixe Anschlussbereich (24) sich über dem Turm (1) befindet.

3. Bearbeitungsmaschine gemäß einem der Ansprüche 1 oder 2, **dadurch gekennzeichnet, dass**, in der maximalen Einrollposition, das Kabel- und Schlauchbündel (23a) ein S bildet.

4. Bearbeitungsmaschine gemäß einem beliebigen der Ansprüche 1 bis 3, **dadurch gekennzeichnet, dass** sie Mittel zu Steuerung der Drehung des Turms umfasst, die eine alternative Drehung des Turms (1) mit einer Bearbeitungssequenz mit teilweisen Drehungen ausgehend von einer ursprünglichen Position in eine erste Richtung für die aufeinander folgenden Übertragungen von Werkstücken von Posten zu Posten zwischen den aufeinander folgenden Bearbeitungsschritten und mit einer schnellen Rückkehrsequenz mit umgekehrter Drehung bis zur ursprünglichen Position des Turms (1) sicherstellen.

5. Bearbeitungsmaschine gemäß einem beliebigen der Ansprüche 1 bis 4, **dadurch gekennzeichnet, dass** die Mittel zur Steuerung der Drehung des Turms (1) eine doppelte Indexierung ermöglichen, d. h. eine einfache Indexierung, um den Turm (1) um einen Rotationswinkel schwenken zu lassen, der dem Winkel entspricht, der erforderlich ist, um ein Werkstück von einem Arbeitsposten bis zum nächstliegenden Arbeitsposten zu führen, und eine doppelte Indexierung, die einer Drehung des Turms entspricht, die ermöglicht, ein Werkstück direkt zum Bearbeitungsposten zu leiten, der dem nächstliegenden Posten folgt.

6. Bearbeitungsmaschine gemäß einem beliebigen der Ansprüche 1 bis 5, **dadurch gekennzeichnet, dass** mindestens gewisse der Bearbeitungsposten (4, 14) eine vertikale tragende Wand (16) umfassen, die parallel zur Achse (II) einer Elektrodrehspindel (15) ausgerichtet ist und einen Bearbeitungseinheit-Trägerplatte (19) mit Hilfe einer Axialkulisse (20) und einer Vertikalkulisse (21) tragen, die eine Kreuzschlittenstruktur darstellen.

7. Bearbeitungsmaschine gemäß Anspruch 6, **dadurch gekennzeichnet, dass** sie mindestens an gewissen der Bearbeitungsposten (14) zwei Kreuzschlittenstrukturen umfasst, eine erste Struktur mit einer ersten Platte (19) um den unteren und vorderen Bearbeitungsraum abzudecken, eine zweite Struktur mit einer zweiten Platte (22) um den oberen Bearbeitungsraum abzudecken.

8. Bearbeitungsmaschine gemäß einem der Ansprüche 6 oder 7, **dadurch gekennzeichnet, dass** sie untere Auslassöffnungen zwischen den aufeinander folgenden vertikalen tragenden Wänden (16, 17) umfasst.

9. Bearbeitungsmaschine gemäß einem beliebigen der Ansprüche 1 bis 8, **dadurch gekennzeichnet, dass** sich das Kabel- und Schlauchbündel (23a) in S-Form zwischen einem zentralen Mittel (1a), einer ringförmigen peripheren Führung (2a) und einer ringförmigen Zwischenführung (2b) auf- und abrollt.

10. Bearbeitungsmaschine gemäß einem beliebigen der Ansprüche 1 bis 9, **dadurch gekennzeichnet, dass** das Kabel- und Schlauchbündel in S-Form (23a) die Drehspindeln des Turms (1) mit elektrischer Energie für die Drehspindelmotoren versorgt, mit hydraulischer Energie zum Einklemmen der Werkstücke in den Spindeln, mit Wasser zur Kühlung, mit Öl zur Schmierung versorgt.

11. Bearbeitungsmaschine gemäß einem beliebigen der Ansprüche 1 bis 10, **dadurch gekennzeichnet, dass** das Kabel- und Schlauchbündel in S-Form (23a) die Drehspindeln bei einigen Vorgängen, die pneumatische Energie benötigen, mit Luft versorgt.

12. Bearbeitungsmaschine gemäß einem beliebigen der Ansprüche 1 bis 11, **dadurch gekennzeichnet, dass** sie an mindestens einem der Bearbeitungsposten einen Roboter zur Rückführung der Werkstücke umfasst, der ein Werkstück aus der vorhandenen Drehspindel entfernen, das Werkstück rückführen und es in die vorhandene Drehspindel oder in eine nächstliegende Spindel festspannen kann.

## Claims

1. A multi-station machine with rotary transfer for machining workpieces, comprising :
- an indexable rotary turret (1) fitted with a plurality of devices for holding workpieces distributed at the periphery of the turret (1),
- a plurality of devices for holding and positioning tools, distributed at a plurality of machining stations around the turret (1) and suitable for machining workpieces carried by the workpiece-holding devices,
- the workpiece-holding devices comprising turning spindles (3, 15), positioned fixed on the turret (1), the axis of which (I, II) is orientated towards the periphery of the turret (1) and which are capable of rapidly rotating the workpiece for a turning operation by the turning tools provided in the at least one of the machining stations (4,14),
- the turning spindles (3, 15) being able to be indexed in all angular positions in order to allow other machining of the workpiece by other suitable tools provided in the at least one of the machining stations (4, 14),
**characterised in that**:
- the supply of electrical energy to the turning spindles (3, 15) is provided via a harness of cables and pipes (23a) wound around the axis of rotation of the turret (1) between a stationary connection zone (24) on the frame (2) and a rotating connection zone (25) on the turret (1),
- the harness of cables and pipes (23a) is shaped, viewed from above, as an S which folds and unfolds during rotation of the turret (1).

2. The processing machine according to claim 1, **characterised in that** the stationary connection zone (24) is situated above the turret (1).

3. The processing machine according to one of claims 1 or 2, **characterised in that**, in the maximum wound position, the harness of cables and pipes (23a) forms an S.

4. The processing machine according to any one of claims 1 to 3, **characterised in that** it comprises means for controlling the rotation of the turret ensuring an alternating rotation of the turret (1), with a machining sequence with partial rotations from a starting position in a first direction for the successive transfers of workpieces from station to station between the successive processing steps, and with a return sequence with rapid inverse rotation back to the starting position of the turret (1).

5. The processing machine according to any one of claims 1 to 4, **characterised in that** the means for controlling the rotation of the turret (1) allow a double indexing, in particular a single indexing for pivoting the turret (1) from an angle of rotation corresponding to the angle required for conveying a workpiece from a workstation to an adjacent workstation, and a double indexing corresponding to a turret rotation enabling the conveying of a workpiece directly to the processing station which follows the adjacent station.

6. The processing machine according to any one of claims 1 to 5, **characterised in that** certain at least of the machining stations (4, 14) comprise a vertical support wall (16) orientated parallel to the axis (II) of an electric turning spindle (15) and carrying a machining unit-carrier plate (19) by means of an axial slide (20) and a vertical slide (21) forming a crossed-carriage structure.

7. The processing machine according to claim 6, **characterised in that** it comprises, in certain at least of the machining stations (14), two crossed-carriage structures, a first structure with a first plate (19) for covering the lower front machining space, and a second structure with a second plate (22) for covering the upper machining space.

8. The processing machine according to one claims 6 or 7, **characterised in that** it comprises lower discharge passages between the successive vertical support walls (16, 17).

9. The processing machine according to any one of claims 1 to 8, **characterised in that** the S-shaped harness of cables and pipes (23a) winds and unwinds between a central means (1a), a peripheral annular guide (2a) and an intermediate annular guide (2b).

10. The processing machine according to any one of claims 1 to 9, **characterised in that** the S-shaped harness of cables and pipes (23a) supplies the turning spindles of the turret (1) with electrical energy for the turning spindle motors, with hydraulic energy for clamping the workpieces in the spindles, with water for cooling, and with oil for lubrication.

11. The processing machine according to any one of claims 1 to 10, **characterised in that** the S-shaped harness of cables and pipes (23a) supplies the turning spindles with air for certain operations requiring pneumatic energy.

12. The processing machine according to any one of claims 1 to 11, **characterised in that** it comprises, at least one of the machining stations, a robot for reversing the workplace which can remove a workpiece from the present turning spindle, reverse the workpiece, and engage it in said present turning spindle or in an adjacent spindle.
